Europäisches Patentamt

(19) European Patent Office

Office européen des brevets

(11) Numéro de publication : **0 048 665 B2**

(12) **NOUVEAU FASCICULE DE BREVET EUROPEEN**

(45) Date de publication du nouveau fascicule du brevet : **22.05.91 Bulletin 91/21**

(51) Int. Cl.⁵ : **B23D 27/02**, B23D 29/02

(21) Numéro de dépôt : **81401435.3**

(22) Date de dépôt : **15.09.81**

(54) **Cisaille pour la découpe de tôles, feuillards et objets analogues, métalliques ou non.**

(30) Priorité : **29.09.80 FR 8020817**

(43) Date de publication de la demande : **31.03.82 Bulletin 82/13**

(45) Mention de la délivrance du brevet : **11.04.84 Bulletin 84/15**

(45) Mention de la décision concernant l'opposition : **22.05.91 Bulletin 91/21**

(84) Etats contractants désignés : **AT BE CH DE GB IT LI LU NL SE**

(56) Documents cités : **DE-A- 2 845 692** **DE-C- 1 007 663** **US-A- 2 093 987** **US-A- 3 492 724**

(56) Documents cités :
US-A- 3 772 782
US-A- 4 177 664
Prospectus: cisailles EDMA
Prospekt-Katalog ERDI 106, gültig ab 15. April 1978, Seite 14
Prospekt-Katalog ERDI 101, gültig ab 13. Mai 1974, Seiten 6,9

(73) Titulaire : **SOCIETE D'EXPLOITATION DES ETABLISSEMENTS PIERRE GREHAL** **2, boulevard de la Gare** **F-95350 Saint-Brice-sous-Forêt Val d'Oise (FR)**

(72) Inventeur : **Malagnoux, Roger** **2, rue Beranger F-95350** **Saint-Brice-sous-Forêt** **Val d'Oise (FR)**

(74) Mandataire : **Madeuf, Claude Alexandre Jean et al** **CABINET MADEUF 3, avenue Bugeaud** **F-75116 Paris (FR)**

EP 0 048 665 B2

## Description

Cisaille pour la découpe de tôles, feuillards et objets analogues, métalliques ou non

La présente invention concerne les cisailles pour la découpe de produits en feuilles ou plaques, notamment pour la découpe de tôles ou de feuillards, métalliques ou non.

On connaît de longue date des cisailles qui comportent deux éléments articulés l'un à l'autre à la manière de ciseaux. Ces cisailles ont l'inconvénient de déformer les produits coupés.

On connaît également des cisailles qui comportent une lame de coupe disposée entre deux contre-lames maintenues à l'extrémité d'un corps de support auquel est articulé un levier de manoeuvre de la lame de coupe. Ces cisailles donnent satisfaction, car elles permettent de découper un copeau de la largeur de la lame de coupe tout en maintenant les bords de la pièce d'ouvrage appliquée contre les contre-lames. On évite ainsi de déformer la pièce d'ouvrage. Cet état de la technique publié par un prospectus a servi à délimiter la revendication 1.

Les cisailles connues présentent cependant des inconvénients.

Tout d'abord, lorsque la découpe ne doit pas s'étendre d'une extrémité à une autre de la pièce d'ouvrage, il est nécessaire ensuite de séparer le copeau qui est généralement roulé sur le dessus de la pièce d'ouvrage. Cette opération nécessite l'usage d'une pince et ensuite l'ébardage de la pièce d'ouvrage.

Par ailleurs, les cisailles connues ne permettent que difficilement l'exécution de découpes suivant un trajet sinueux et encore plus difficilement l'exécution de découpes formant un angle vif entre elles.

La demande de brevet allemand 2 845 692 a cependant décrit une pince dite à grignoter comportant une contre-lame en forme de U dont le fond s'étend verticalement et qui coopère avec une lame formant un crochet à son extrémité pour couper à chaque cycle de fermeture de la pince un petit copeau. Dans cette disposition, le crochet de coupe ne permet pas de former un copeau continu et, de plus, il s'use rapidement, ce qui oblige à des changements fréquents de lame.

La présente invention remédie aux inconvénients énoncés ci-dessus en créant une nouvelle cisaille pouvant couper le copeau dès que celui-ci devient gênant.

Conformément à l'invention, la cisaille comportant un corps formant une poignée à une extrémité et, à son autre extrémité, une portée d'appui oblique, des contre-lames pour une lame de coupe formée par l'extrémité d'un levier articulé dans le corps et relié par un axe à l'extrémité d'un levier principal formant une seconde poignée est caractérisée en ce que lesdites contre-lames sont constituées par les bords latéraux d'une fente formée dans le fond d'un étrier, lequel est appliqué contre ladite portée d'appui, et en ce que la fente est délimitée à l'avant par une surface d'extrémité ou de fond qui permet à l'extrémité de la lame de coupe de venir à son contact de manière à arrêter la découpe et à séparer le copeau.

Diverses autres caractéristiques de l'invention ressortent d'ailleurs des revendications 2 à 8.

Une forme de réalisation de l'object de l'invention est représentée, à titre d'exemple non limitatif, au dessin annexé.

La figure 1 est une élévation en partie arrachée de la cisaille objet de l'invention.

La figure 2 est une vue de dessous correspondant à la fig. 1.

La figure 3 est une coupe-élévation partielle très agrandie illustrant une position de travail caractéristique.

La figure 4 est une coupe-élévation analogue à la fig. 3 illustrant une autre position de travail.

La cisaille illustrée au dessin comporte un corps 1 qui est constitué par un profilé métallique présentant en section la forme d'un U, c'est-à-dire qu'il délimite un fond 2 et deux ailes 2a, 2b.

Le corps 1 est cintré sur sa longueur pour que son fond s'étende tout d'abord suivant une droite 1a et qu'ensuite, il forme une partie convexe 1b et enfin une partie concave 1c sur laquelle est enfilée une poignée 3 qui est donc concave sur son dessus et convexe sur son dessous. La poignée 3 forme une butée 3a. L'extrémité des ailes 2a, 2b est coupée en biseau pour former des bords d'appui 4 et le fond 2 est découpé pour ménager au-dessus des bords d'appui 4 une encoche 5. Les bords d'appui 4 des ailes sont appliqués contre le fond d'un étrier 6 qui est emboîté sur les extrémités des ailes 2a, 2b et fixés à celles-ci par des vis 7. L'étrier 6 forme à sa partie supérieure des pattes 8 servant au maintien d'un déflecteur 9, de préférence réalisé en matière transparente.

Le corps 1 décrit ci-dessus supporte par une articulation 10 un levier principal 11 également constitué par un profilé en U qui est conformé pour que sa partie la plus éloignée de l'articulation 10 présente un dessous convexe et un dessus concave, cette extrémité étant recouverte par une poignée $3_1$ formant comme la poignée 3 une butée $3a_1$. Le profilé formant le levier 11 est suffisamment étroit pour pouvoir être emboîté dans le profilé qui constitue le corps 1.

L'extrémité libre du levier principal 11 est reliée par un axe 12 à un levier 13 monté sur un axe 14 qui traverse les côtés de l'étrier 6 et les ailes 2b du profilé 2 constitutif du corps 1. Des rondelles 13a centrent le levier 13.

L'extrémité libre du levier 13 forme une lame de coupe 15 dont le dessus présente des dents 15a.

Le dessin montre que la lame de coupe 15 passe par une boutonnière 16 pratiquée dans le fond de l'étrier 6, l'extrémité de travail de la lame 15 étant engagée dans la fente 17 dont les bords constituent des contre-lames de coupe.

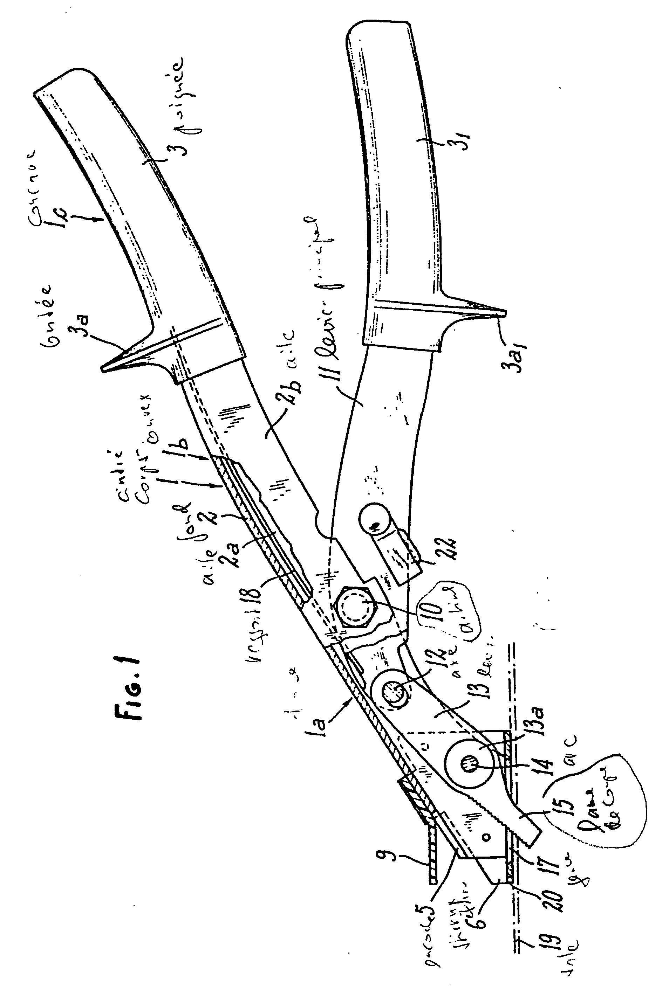

Un ressort 18 est prévu dans le corps 1 pour tendre toujours à faire pivoter le levier principal 11 dans le sens de l'ouverture pour laquelle la lame de coupe 15 se trouve juste engagée dans la fente 17, c'est-à-dire dans la position illustrée à la fig. 1.

Pour exécuter des découpes d'une tôle, par exemple de la tôle 19, l'opérateur appuie le fond de la paume sur le dessus concave de la poignée 3, le côté de sa main venant appuyer contre la butée 3a ; les doigts épousent alors le dessous convexe de la poignée $3_1$, l'index étant appliqué contre la butée $3a_1$.

Les formes de poignée décrites ci-dessus assurent une préhension parfaite de la cisaille, étant donné qu'elles correspondent à la morphologie de la main humaine.

L'opérateur applique alors le dessous de l'étrier 6 sur la tôle a découper ; le dessous de l'étrier est plan pour permettre un guidage correct de la cisaille sur la tôle à découper et le tracé de la découpe à exécuter est visible à travers le déflecteur 9 qui est transparent et qui permet à l'opérateur de voir l'extrémité de la fente 17.

Une encoche de guidage 20 est en outre avantageusement prévue à l'extrémité du fond de l'étrier pour faciliter le repérage du tracé de coupe.

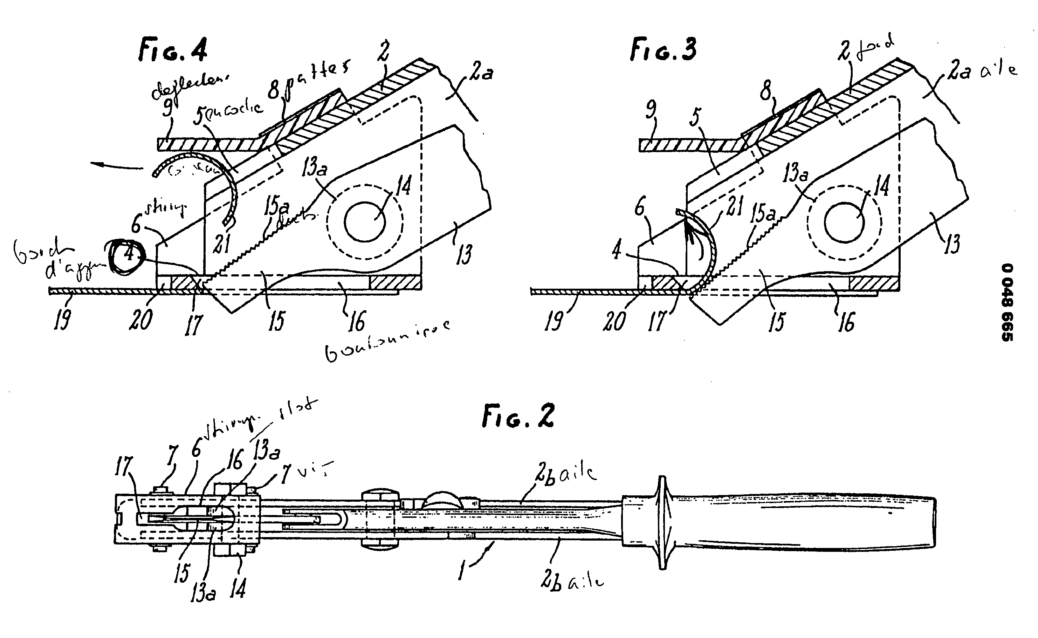

En agissant sur le levier principal 11 et en maintenant la lame de coupe 15 contre la partie en cours de découpe de la tôle 19, l'opérateur fait avancer la cisaille qui soulève le copeau 21 comme illustré à la fig. 3, ce copeau étant roulé au fur et à mesure de sa formation.

Si l'opérateur désire arrêter la découpe à un tracé déterminé et séparer le copeau 21, il suffit qu'il serre à fond le levier principal 11 de manière que l'extrémité de la lame de coupe 15 vienne en contact avec le fond de la fente 17 ; ainsi, le copeau est coupé comme l'illustre la fig. 4.

Le déflecteur 9 forme un élément protecteur lorsque le copeau 21 est éjecté.

L'extrémité de la lame 15 étant de faible dimension, il est possible d'effectuer facilement des découpes suivant des arrondis et même de réaliser des découpes formant un angle vif.

L'invention n'est pas limitée à l'exemple de réalisation représenté et décrit en détail car diverses modifications peuvent y être apportées sans sortir de son cadre. En particulier, il est avantageux de munir le levier principal d'un cran d'arrêt 22. De même, une même cisaille peut être prévue avec un jeu de lames de coupe et d'étriers différents pour permettre l'exécution de coupes plus ou moins large.

## Revendications

1. Cisaille pour découper des tôles, feuillards et objets analogues, métalliques ou non, comportant un corps (1) formant une poignée (3) à une extrémité et, à son autre extrémité une portée d'appui oblique, des contre-lames pour une lame de coupe (15) formée par l'extrémité d'un levier (13) articulé dans le corps (1) et relié par un axe (12) à l'extrémité d'un levier principal (11) formant une seconde poignée ($3_1$) caractérisée en ce que lesdites contre-lames sont constituées par les bords latéraux d'une fente (17) formée dans le fond d'un étrier (6), lequel est <u>appliqué contre ladite</u> portée d'appui, et en ce que la fente (17) est délimitée à l'avant par une surface d'extrémité ou de fond qui permet à l'extrémité de la lame de coupe de venir à son contact de manière à arrêter la découpe et à séparer le copeau.

2. Cisaille suivant la revendication 1, caractérisée en ce que le corps est constitué par un profilé en U qui est galbé de manière que sa partie formant poignée délimite sur le dessus une partie concave (1c) s'étendant jusqu'à une butée (3a) pour l'emboîtement de la paume, le levier principal (11) étant également constitué par un profilé et le dessous de la poignée qu'il forme étant convexe pour correspondre à l'extrémité des doigts, une butée (3a,) servant d'appui à l'index de la main.

3. Cisaille suivant l'une des revendications 1 ou 2, caractérisée en ce que l'extrémité du corps qui délimite la portée d'appui présente sur son dessus une encoche (5) permettant de voir la fente (17) et la lame de coupe (15).

4. Cisaille suivant l'une des revendications 1 à 3, caractérisée en ce que l'extrémité du fond de l'étrier présente une encoche (20) alignée avec la fente de coupe.

5. Cisaille suivant l'une des revendications 1 à 4, caractérisée en ce que la lame de coupe (15) présente des dents sur son dessus.

6. Cisaille suivant l'une des revendications 1 à 5, caractérisée en ce que l'étrier forme des pattes pour le maintien d'un déflecteur transparent (9) recouvrant l'encoche (5) du corps et permettant de voir la fente (17) et la lame de coupe (15).

7. Cisaille suivant l'une des revendications 1 à 6, caractérisée en ce que la position de la lame de coupe (15) est choisie pour que celle-ci atteigne le fond de la fente (17) délimitant les contre-lames lorsque le levier principal est rapproché contre le corps de façon à sectionner le copeau normalement soulevé pendant la coupe.

8. Cisaille suivant l'une des revendications 1 à 7, caractérisée en ce que le dessous de l'étrier est plan et forme une boutonnière (16) en arrière de la fente (17) délimitant les contre-lames.

**Claims**

1. Shear for cutting sheets, strips and similar articles, either metallic or not, comprising a body (1) forming a handle (3) at one end and, at its other end, an oblique support surface, counter-blades for a cutting blade (15) formed by the end of a lever (13) articulated in the body (1) and connected by a pin (12) to the end of a main lever (11) forming a second handle (3₁), characterized in that said counter-blades are constituted by the side edges of a slot (17) formed in the bottom of a stirrup (6), which is applied on said support surface, and in that the slot (17) is defined at the front thereof by an end or bottom surface which enables the end of the cutting blade to come into engagement therewith in order to stop the cut and separate the shaving.

2. Shear according to claim 1, characterized in that the body is constituted by a U-shaped profile which is curved such that its handle forming part defines on the top a concave part (1c) extending to an abutment (3a) for engaging the hand palm, the main lever (11) being also constituted by a profile member and the bottom portion of the handle that it forms being convex for matching with the ends of the fingers, an abutment (3a₁) being used as a support for the forefinger of the hand.

3. Shear according to one of claims 1 or 2, characterized in that the end of the body which defines the support surface has on its top portion a notch (5) enabling to see the slot (17) and the cutting blade (15).

4. Shear according to one of claims 1 to 3, characterized in that the end of the bottom of the stirrup has a notch (20) in alignment with the cutting slot.

5. Shear according to one of claims 1 to 4, characterized in that the cutting blade (15) is provided with teeth on the top portion thereof.

6. Shear according to one of claims 1 to 5, characterized in that the stirrup forms lugs for maintaining a transparent deflector (9) covering the notch (5) of the body and enabling to see the slot (17) and the cutting blade (15).

7. Shear according to one of claims 1 to 6, characterized in that the position of the cutting blade (15) is chosen so that the latter reaches the bottom of the slot (17) defining the counter-blades when the main lever is brought against the body so as to cut off the shaving normally lifted during the cutting operation.

8. Shear according to one of claims 1 to 7, characterized in that the bottom portion of the stirrup is plane and forms a bottom-hole (16) rearwardly of the slot (17) defining the counter-blades.

**Ansprüche**

1. Schere zum Schneiden von Blech, Bandeisen und ähnlichen metallischen oder nicht metallischen Gegenständen mit einem Körper (1), der an dem einen Ende einen Griff (3) bildet und an dem anderen Ende eine schräge Stützfläche aufweist, und Gegenklingen zu einer Scherklinge (15), die durch das Ende eines Hebels (13) gebildet ist, der am Körper (1) gelenkig angeordnet und über eine Achse (12) mit dem Ende eines mit einem zweiten Griff (3₁) versehenen Haupthebels (11) verbunden ist, dadurch gekennzeichnet, dass die besagten Gegenklingen durch die Seitenkanten eines Schlitzes (17) gebildet sind, der im Bodenteil eines Bügels (6) eingearbeitet ist, wobei dieser Bügel gegen die besagte Stützfläche gedrückt wird, und dass der Schlitz (17) nach vorne durch eine End- oder Bodenfläche abgegrenzt ist, mit welcher die Scherklinge in Berührung kommen kann, wodurch der Schnittvorgang gestoppt und der Span abgetrennt wird.

2. Schere nach Anspruch 1, dadurch gekennzeichnet, dass der Körper durch ein U-Profil gebildet ist, das so herausgearbeitet ist, dass sein als Griff ausgebildeter Teil an der Oberseite einen konkaven Teil (1c) begrenzt, der sich bis zu einem Anschlag (3a) zur Einfügung der Handteller erstreckt, wobei der Haupthebel (11) ebenfalls durch ein Profil gebildet und die Unterseite des durch ihn gebildeten Griffs zur Anpassung an die Fingerspitzen konvex ausgebildet ist, während der Zeigefinger an einem Anschlag (3a₁) anliegt.

3. Schere nach einem der Ansprüche 1 oder 2, dadurch gekennzeichnet, dass das Ende des Körpers, das die Stützfläche abgrenzt, auf seiner Oberseite eine Ausnehmung (5) aufweist, die es ermöglicht, den Schlitz (17) und die Schnittklinge (15) zu sehen.

4. Schere nach einem der Ansprüche 1 bis 3, dadurch gekennzeichnet, dass am Ende des Bodenteils des Bügels eine Aussparung (20) vorgesehen ist, die mit dem Schnittschlitz in einer Fluchtlinie liegt.

5. Schere nach einem der Ansprüche 1 bis 4, dadurch gekennzeichnet, dass die Schnittklinge (15) auf ihrer Oberseite eine Verzahnung aufweist.

6. Schere nach einem der Ansprüche 1 bis 5, dadurch gekennzeichnet, dass der Bügel mit Flanschen versehen ist, die dazu bestimmt sind, einen durchsichtigen Deflektor (9) zu halten, der die Ausnehmung (5) des Körpers überdeckt und es ermöglicht, den Schlitz (17) und die Schnittklinge (15) zu sehen.

7. Schere nach einem der Ansprüche 1 bis 6, dadurch gekennzeichnet, dass die Lage der Schnittklinge (15) so gewählt ist, dass diese den Boden des Schlitzes (17) erreichen kann, wenn sich der Haupthebel dem Körper nähert, um den normalerweise während des Schnittvorgangs aufgehobenen Span abzuschneiden.

8. Schere nach einem der Ansprüche 1 bis 7, dadurch gekennzeichnet, dass die Unterseite des Bügels flach ausgebildet ist und hinter dem die Gegenklingen begrenzenden Schlitz (17) ein "Knopfloch" (16) bildet.

Fig.1

EP 0 048 665 B2